(19) Europäisches Patentamt
European Patent Office
Office européen des brevets

(11) **EP 4 215 887 A1**

(12) **EUROPEAN PATENT APPLICATION**
published in accordance with Art. 153(4) EPC

(43) Date of publication:
**26.07.2023 Bulletin 2023/30**

(21) Application number: **21869029.5**

(22) Date of filing: **21.07.2021**

(51) International Patent Classification (IPC):
*G01J 3/52* (2006.01)        *G01L 1/00* (2006.01)
*G01L 1/24* (2006.01)

(52) Cooperative Patent Classification (CPC):
**G01J 3/52; G01L 1/00; G01L 1/24**

(86) International application number:
**PCT/JP2021/027291**

(87) International publication number:
**WO 2022/059342 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2020   JP 2020156195**

(71) Applicant: **FUJIFILM Corporation
Tokyo 106-8620 (JP)**

(72) Inventor: **YAMAZAKI Yoshiro
Tokyo 106-8620 (JP)**

(74) Representative: **Meissner Bolte Partnerschaft
mbB
Patentanwälte Rechtsanwälte
Postfach 86 06 24
81633 München (DE)**

(54) **IMAGE PROCESSING DEVICE, IMAGE PROCESSING METHOD, PROGRAM, AND RECORDING MEDIUM**

(57)    In an image processing apparatus, an image processing method, a program, and a recording medium, a first image signal corresponding to a spectral sensitivity and a second image signal that corresponds to the spectral sensitivity and that has at least one spectral sensitivity different from the first image signal are acquired from an image signal of a captured image of a measurement sheet. The first image signal is set as a third image signal, or the third image signal is generated by calculating a total of two or more first image signals for each pixel. The second image signal is set as a fourth image signal, or the fourth image signal is generated by calculating a total of two or more second image signals for each pixel. A fifth image signal is generated by calculating a ratio between the third image signal and the fourth image signal for each pixel, and a surface distribution of an external energy amount applied to the measurement sheet is derived based on the fifth image signal.

FIG. 3

```
              START
                │
   DECIDE EXPRESSION TO BE SELECTED ─ S1
                │
      CREATE CALIBRATION CURVE ─ S2
                │
┌─────────────────────────────────────────────┐─ S3
│ DERIVE EXTERNAL ENERGY AMOUNT FROM RATIO OF   │
│   IMAGE SIGNAL OF MEASUREMENT SHEET           │
│                                               │
│      IMAGE MEASUREMENT SHEET ─ S3-1           │
│                │                              │
│  ACQUIRE IMAGE SIGNAL OF CAPTURED IMAGE ─ S3-2│
│         OF MEASUREMENT SHEET                  │
│                │                              │
│     ACQUIRE FIRST IMAGE SIGNAL ─ S3-3         │
│                │                              │
│     ACQUIRE SECOND IMAGE SIGNAL ─ S3-4        │
│                │                              │
│     GENERATE THIRD IMAGE SIGNAL ─ S3-5        │
│                │                              │
│     GENERATE FOURTH IMAGE SIGNAL ─ S3-6       │
│                │                              │
│     GENERATE FIFTH IMAGE SIGNAL ─ S3-7        │
│                │                              │
│  DERIVE SURFACE DISTRIBUTION OF EXTERNAL ─ S3-8│
│    ENERGY AMOUNT FROM FIFTH IMAGE SIGNAL      │
└─────────────────────────────────────────────┘
                │
              END
```

EP 4 215 887 A1

**Description**

**BACKGROUND OF THE INVENTION**

1. Field of the Invention

The present invention relates to an image processing apparatus, an image processing method, a program, and a recording medium for deriving an external energy amount applied to a measurement sheet based on a color optical density of the measurement sheet.

2. Description of the Related Art

In imaging, using an imaging apparatus such as a camera, a measurement sheet that has developed a color of a predetermined density corresponding to an external energy amount under application of external energy, and deriving the external energy amount applied to the measurement sheet from an image signal (density value) of a captured image of the measurement sheet, it is necessary to perform shading correction for eliminating unevenness in a surface distribution of a density of the captured image of the measurement sheet caused by unevenness in a surface distribution of intensity of illumination light.

In a case of performing the shading correction, for example, an image for the shading correction, for example, a white standard image, is captured, and a shading correction parameter for eliminating the unevenness in the surface distribution of the density of the captured image of the measurement sheet is created based on an image signal of the captured image. The shading correction of the image signal of the captured image of the measurement sheet is performed using the shading correction parameter.

However, unlike a case where an illumination state (illumination condition) is constantly maintained as in a high-performance scanner or the like, in a case where a user images the measurement sheet by holding the imaging apparatus such as a camera in hand or scans the measurement sheet using a scanner having low performance, it is particularly difficult to constantly maintain the illumination state. Thus, it is necessary to capture the image of the measurement sheet while restricting a change in the illumination state from when the image for the shading correction is captured.

For example, JP2516263Y and JP2003-520515A are prior art documents as a reference for the present invention.

JP2516263Y discloses a pressure measurement device that obtains a pressure applied to pressure paper which develops a color of a shade based on the applied pressure, by imaging the pressure paper using a camera, obtaining a relationship between a relative density value and an absolute density value of a grayscale image as an approximation expression using the least squares method, transforming a relative density value of the imaged pressure paper to an absolute density value using the approximation expression and obtaining an area representing a shade belonging to the absolute density value in the pressure paper, multiplying the area by a pressure per unit area for developing a color of a shade showing the absolute density value in the pressure paper, and obtaining a sum of the multiplication results for all gradations.

JP2003-520515A discloses, based on a fact that RGB signals change in magnitude under various intensity of light, and that the RGB signals become equal to (kR, kG, kB) in a case where the intensity is increased by a factor of k, eliminating dependency for intensity (k) and eliminating a change in an image caused from variations in intensity of illumination by dividing RGB vectors by, for example, (R + G + B), and normalizing the divided RGB vectors with respect to intensity.

**SUMMARY OF THE INVENTION**

However, JP2516263Y discloses only a technology for correcting a change in color optical density of the pressure paper caused by a change in the intensity of the illumination light in order to accurately obtain the color optical density of the pressure paper, and does not specifically disclose correction of unevenness in a surface distribution of the color optical density of the pressure paper caused by the unevenness in the surface distribution of the intensity of the illumination light.

On the other hand, while JP2003-520515A discloses a technology for obtaining a ratio of a color signal and normalizing the ratio with respect to intensity of illumination light as signal processing not affected by a change in the intensity of the illumination light, a technology for deriving a pressure value from the ratio of the color signal based on a relationship between the ratio of the color signal and the pressure value is not disclosed.

An object of the present invention is to solve the problems of the technology in the related art and to provide an image processing apparatus, an image processing method, a program, and a recording medium that can accurately derive an external energy amount applied to a measurement sheet from a color optical density of the measurement sheet without using an image for shading correction.

In order to accomplish the above object, according to an aspect of the present invention, there is provided an image processing method comprising acquiring an image signal of a captured image obtained by imaging a measurement sheet that has developed a color of a density corresponding to an external energy amount under application of external energy, using a sensor having a plurality of different spectral sensitivities,

acquiring one or two or more first image signals corresponding to one or two or more spectral sensitivities from the image signal of the captured image,

acquiring one or two or more second image signals that correspond to the one or two or more spectral sensitivities and that have at least one spectral sensitivity different from the first image signal, from the image signal of the captured image,

setting the one first image signal as a third image signal or generating the third image signal by calculating a total of the two or more first image signals for each pixel,

setting the one second image signal as a fourth image signal or generating the fourth image signal by calculating a total of the two or more second image signals for each pixel,

generating a fifth image signal by calculating a ratio between the third image signal and the fourth image signal for each pixel, and

deriving a surface distribution of the external energy amount applied to the measurement sheet based on the fifth image signal.

Here, it is preferable that the plurality of spectral sensitivities are an R sensitivity, a G sensitivity, and a B sensitivity.

In addition, it is preferable that the fifth image signal and the external energy amount are in a mapping relationship in which the external energy amount is uniquely determined based on the fifth image signal, and a calibration curve is created in advance based on the mapping relationship.

In addition, it is preferable that a surface distribution of the external energy amount applied to the measurement sheet is derived from the fifth image signal using the calibration curve.

In addition, it is preferable that the calibration curve is created based on a relationship between the external energy amount applied to the measurement sheet and the fifth image signal generated from an image signal of a captured image obtained by imaging, using the sensor, a patch that is created on the measurement sheet and that has developed a color under application of the external energy amount to the measurement sheet on conditions of different external energy amounts, or a patch that is created on a sheet different from the measurement sheet using the same coloring material as the measurement sheet and that has developed a color of the same density as the patch created on the measurement sheet.

In addition, it is preferable that the conditions of the different external energy amounts include a condition in which the external energy is not applied to the measurement sheet.

In addition, it is preferable that as strength of nonlinearity of the mapping relationship in the calibration curve is increased, the number of the patches is increased.

In addition, it is preferable that the number of the patches is larger within a strong range of nonlinearity of the mapping relationship in the calibration curve than within a strong range of linearity of the mapping relationship in the calibration curve.

In addition, it is preferable that shape distortion of the captured image of the measurement sheet is corrected after the acquisition of the image signal of the captured image of the measurement sheet and before the acquisition of the first image signal, and

the fifth image signal is generated from the image signal of the captured image of the measurement sheet after the correction of the shape distortion.

In addition, it is preferable that gradation transformation of transforming the image signal of the captured image of the measurement sheet from an image signal of linear brightness to an image signal having a gamma curve is not performed after the acquisition of the image signal of the captured image of the measurement sheet and before the acquisition of the first image signal, and

the fifth image signal is generated from the image signal of the captured image of the measurement sheet on which the gradation transformation is not performed.

In addition, according to another aspect of the present invention, there is provided an image processing apparatus comprising a processor, in which the processor is configured to

acquire an image signal of a captured image obtained by imaging a measurement sheet that has developed a color of a density corresponding to an external energy amount under application of external energy, using a sensor having a plurality of different spectral sensitivities,

acquire one or two or more first image signals corresponding to one or two or more spectral sensitivities from the image signal of the captured image,

acquire one or two or more second image signals that correspond to the one or two or more spectral sensitivities and that have at least one spectral sensitivity different from the first image signal, from the image signal of the captured image,

set the one first image signal as a third image signal or generate the third image signal by calculating a total of the two or more first image signals for each pixel,

set the one second image signal as a fourth image signal or generate the fourth image signal by calculating a total of the two or more second image signals for each pixel,

generate a fifth image signal by calculating a ratio between the third image signal and the fourth image signal for each pixel, and

derive a surface distribution of the external energy amount applied to the measurement sheet based on the fifth image signal.

In addition, according to still another aspect of the present invention, there is provided a program causing a computer to execute each step of the image processing method.

In addition, according to still another aspect of the present invention, there is provided a computer readable recording medium on which a program causing a computer to execute each step of the image processing method is recorded.

According to the present invention, an unevenness component is canceled out by calculating the ratio of the image signal. Thus, even without performing shading correction based on an image for the shading correction, unevenness in a surface distribution of a density of the captured image of the measurement sheet caused by unevenness in a surface distribution of intensity of illumination light can be eliminated as in a case where the shading correction is performed. In addition, a user can accurately derive the external energy amount applied to the measurement sheet from a color optical density of the measurement sheet without considering the unevenness in the surface distribution of the intensity of the illumination light.

**BRIEF DESCRIPTION OF THE DRAWINGS**

Fig. 1 is a block diagram of an embodiment representing a configuration of an image processing apparatus according to an embodiment of the present invention.

Fig. 2 is a block diagram of an embodiment representing an internal configuration of a processor.

Fig. 3 is a flowchart representing an operation of the image processing apparatus.

Fig. 4 is a concept diagram of an embodiment representing a configuration of a chart.

Fig. 5 is a concept diagram of another embodiment representing the configuration of the chart.

Fig. 6 is a graph of a calibration curve representing a relationship between a ratio R' of an R signal of a captured image of a measurement sheet 1 and an external energy amount applied to the measurement sheet 1.

Fig. 7 is a graph of a calibration curve representing a relationship between a ratio G' of a G signal of a captured image of a measurement sheet 2 and an external energy amount applied to the measurement sheet 2.

Fig. 8 is a concept diagram representing a configuration of a measurement sheet of a first example.

Fig. 9 is a graph representing an image signal of a captured image of the measurement sheet of the first example.

Fig. 10 is a concept diagram representing a configuration of the captured image of the measurement sheet of the first example based on a ratio of the image signal.

Fig. 11 is a graph representing the image signal of the captured image of the measurement sheet of the first example based on the ratio of the image signal.

Fig. 12 is a concept diagram representing a configuration of a measurement sheet of a second example.

Fig. 13 is a graph representing an image signal of a captured image of the measurement sheet of the second example.

Fig. 14 is a concept diagram representing a configuration of the captured image of the measurement sheet of the second example based on a ratio of the image signal.

Fig. 15 is a graph representing the image signal of the captured image of the measurement sheet of the second example based on the ratio of the image signal.

Fig. 16 is a concept diagram representing a configuration of a measurement sheet of a third example.

Fig. 17 is a graph representing an image signal of a captured image of the measurement sheet of the third example.

Fig. 18 is a concept diagram representing a configuration of the captured image of the measurement sheet of the third example based on a ratio of the image signal.

Fig. 19 is a graph representing the image signal of the captured image of the measurement sheet of the third example based on the ratio of the image signal.

**DESCRIPTION OF THE PREFERRED EMBODIMENTS**

Hereinafter, an image processing apparatus, an image processing method, a program, and a recording medium according to an embodiment of the present invention will be described in detail based on a preferred embodiment illustrated in the appended drawings.

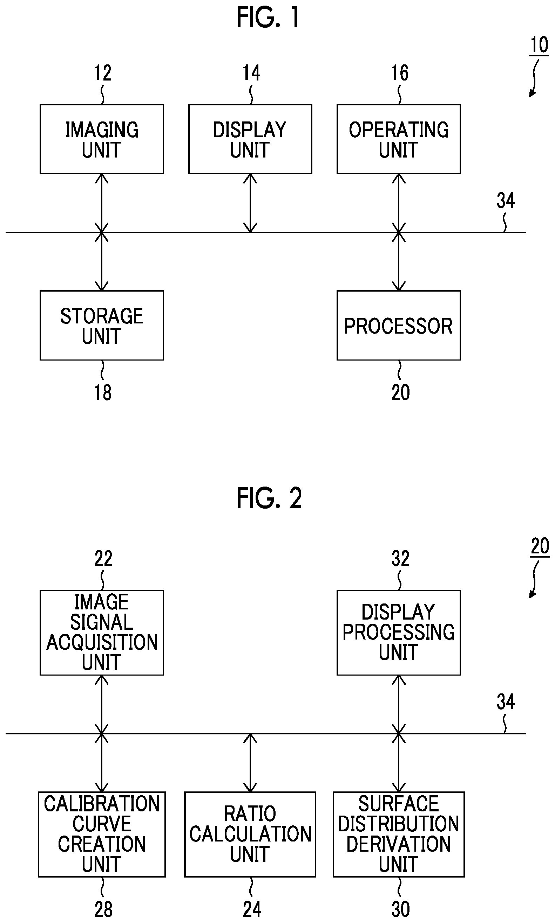

Fig. 1 is a block diagram of an embodiment representing a configuration of the image processing apparatus according to the embodiment of the present invention. An image processing apparatus 10 illustrated in Fig. 1 derives a surface distribution of an external energy amount applied to a measurement sheet based on a color optical density of the measurement sheet. The image processing apparatus 10 of the present embodiment is a smartphone having a camera function and comprises an imaging unit 12, a display unit 14, an operating unit 16, a storage unit 18, and a processor 20 as illustrated in Fig. 1. The display unit 14, the operating unit 16, the imaging unit 12, the storage unit 18, and the processor 20 are bidirectionally connected through an internal bus 34 and can transmit and receive data to and from each other.

The imaging unit 12 includes a sensor having a plurality of different spectral sensitivities and, under control of the processor 20, images a subject using the sensor under any illumination light and outputs an image signal of a captured image. In the present embodiment, the sensor has three spectral sensitivities consisting of a red (R) sensitivity, a green (G) sensitivity, and a blue (B) sensitivity. The imaging unit 12 corresponds to the camera function of the smartphone, and images the measurement sheet and a chart using the sensor and outputs a color image signal consisting of an image signal (R signal) of the R sensitivity, an image signal (G signal) of the G sensitivity, and an image signal (B signal) of the B sensitivity of captured images.

The imaging unit 12 may image the subject using a color sensor and output the color image signal consisting of the R signal, the G signal, and the B signal of the captured image. Alternatively, the imaging unit 12 may sequentially image the subject using a monochrome sensor and optical filters of R, G, and B and sequentially output the R signal of an R image, the G signal of a G image, and the B signal of a B image. In addition, the sensor is not limited to the R sensitivity, the G sensitivity, and the B sensitivity, and a sensor having spectral sensitivities to other colors may also be used.

The measurement sheet has a sheet shape like paper, a sheet, a film, and the like. A color developing portion that has developed a color of a predetermined shape and a predetermined density (tint) corresponding to an external energy amount under application of external energy is formed on at least one surface of the measurement sheet. While the measurement sheet is not particularly limited, examples of the measurement sheet include a pressure-sensitive sheet, a heat-sensitive sheet, and an ultraviolet ray (or a near-infrared ray or a mid-infrared ray) sheet.

The pressure-sensitive sheet, the heat-sensitive sheet, and the ultraviolet ray sheet develop the color of the predetermined shape and the predetermined density corresponding to the applied external energy amount under application of the external energy such as a pressure, a temperature, and an ultraviolet ray (or a near-infrared ray or a mid-infrared ray), respectively. A surface distribution of the external energy amount applied to the measurement sheet can be measured based on the shape and the density of the color developing portion formed on the surface of the measurement sheet.

There are two types of pressures of an instantaneous pressure and a continuous pressure applied to the pressure-sensitive sheet. The instantaneous pressure is a magnitude of the external energy instantaneously applied to the measurement sheet. On the other hand, the continuous pressure is a time-integral of the magnitude of the external energy continuously applied to the measurement sheet. The external energy amount includes both of the magnitude of the external energy based on the instantaneous pressure and the time-integral of the magnitude of the external energy based on the continuous pressure. The same applies to the heat-sensitive sheet, the ultraviolet ray sheet, and the like. In a case of the heat-sensitive sheet, the color optical density when the heat-sensitive sheet is brought into contact with a heat source changes depending on a temperature of the heat source and an amount of contact time (an energy amount of a time-integral of the temperature). In a case of the ultraviolet ray sheet, the color optical density when the ultraviolet ray is received corresponds to a light quantity of the received ultraviolet ray and an amount of light reception time (an energy amount of a time-integral of the light quantity).

The chart includes two or more patches that have developed colors of different densities. As will be described in detail later, the patches included in the chart are used for creating a calibration curve for deriving the surface distribution of the external energy amount applied to the measurement sheet from a ratio of the image signal (color signal) of the captured image of the measurement sheet by associating the ratio of the image signal with the external energy amount applied to the measurement sheet.

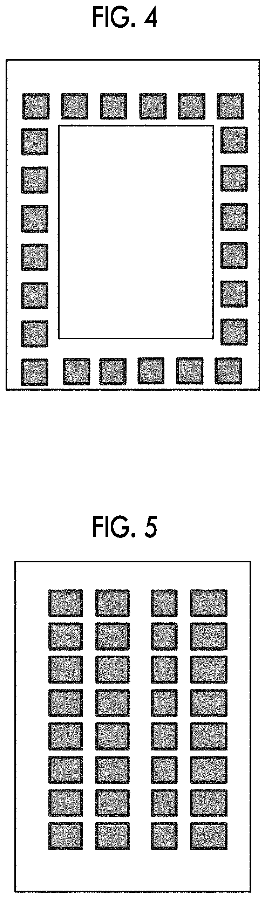

The chart for creating the calibration curve can be created using the measurement sheet. In this case, the chart is created on the measurement sheet and includes two or more patches that have developed colors under application of the external energy to the measurement sheet on conditions of different external energy amounts. In this case, for example, as illustrated in Fig. 4, the patches can be arranged along an edge part on the measurement sheet so that the patches do not obstruct the color developing portion formed on the measurement sheet.

The conditions of the different external energy amounts may include a condition in which the external energy is not applied. A patch created on a condition in which the external energy is not applied is, for example, a white patch. While this white patch may be the same as the other patches included in the chart, a white background region other than regions of the other patches may also be used. In this case, the chart substantially includes only one patch of a determined density.

In addition, the chart can be created on a sheet different from the measurement sheet using the same coloring material as the measurement sheet. In this case, the chart is created on a sheet different from the measurement sheet using the same coloring material as the measurement sheet and includes two or more patches that have developed colors of the same densities as the patches created on the measurement sheet. In this case, as illustrated in Fig. 5, the patches can be arranged at any positions on the sheet different from the measurement sheet.

The number, arrangement, sizes, shapes, and the like of the patches included in the chart are not particularly limited. In addition, the rectangular patches illustrated in Figs. 4 and 5 can also be used for correcting shape distortion in the captured image of the measurement sheet.

The display unit 14 displays various images, information, and the like under control of the processor 20. For example, the display unit 14 is composed of a display such as a liquid crystal display (LCD), an organic electroluminescence (EL) display, a light emitting diode (LED) display, or an electronic paper. A touch panel that receives a touch operation performed by a user of the image processing apparatus 10 is provided in the display unit 14 of the present embodiment.

The operating unit 16 receives an operation of the user under control of the processor 20. The operating unit 16 includes a plurality of buttons provided on an outer surface of a housing of the image processing apparatus 10, a graphical user interface of the touch panel provided in the display unit 14, and the like. In a case of imaging the subject or setting various setting items, the user performs a corresponding operation through the operating unit 16.

The storage unit 18 stores the captured image, that is, the image signal and the like, of the subject imaged by the imaging unit 12 under control of the processor 20. In the present embodiment, the storage unit 18 is a memory device or the like that stores the captured image of the measurement sheet and the captured image of the chart imaged by the imaging unit 12. In addition, the storage unit 18 stores a program executed by the processor 20, various data, and the like.

The processor 20 controls each unit of the image processing apparatus 10 and executes various types of processing including imaging of the subject, storage of the image, display of the image, and the like. As illustrated in Fig. 2, the processor 20 comprises an image signal acquisition unit 22, a ratio calculation unit 24, a calibration curve creation unit 28, a surface distribution derivation unit 30, and a display processing unit 32. The processor 20 functions as each processing unit by causing the processor 20 to execute the program stored in the storage unit 18. The image signal acquisition unit 22, the ratio calculation unit 24, the calibration curve creation unit 28, and the surface distribution derivation unit 30 are bidirectionally connected through the internal bus 34 and can transmit and receive data to and from each other.

The image signal acquisition unit 22 controls an operation of the imaging unit 12 in accordance with an operation (imaging instruction) of the user performed through the operating unit 16 and acquires the captured image, that is, the image signal, of the subject imaged by the sensor. In the present embodiment, the image signal acquisition unit 22 acquires the color image signal consisting of the R signal, the G signal, and the B signal of the captured image of the measurement sheet. In addition, the image signal acquisition unit 22 extracts captured images of the two or more patches corresponding to the regions of the two or more patches from the captured image of the chart and acquires the color image signal consisting of the R signal, the G signal, and the B signal of each of the captured images of the two or more patches.

In addition, the image signal acquisition unit 22 acquires one or two or more first image signals corresponding to one or two or more spectral sensitivities from the image signal of the captured image of the measurement sheet. Furthermore, the image signal acquisition unit 22 acquires one or two or more second image signals that correspond to one or two or more spectral sensitivities and that have at least one spectral sensitivity different from the first image signal, from the image signal of the captured image of the measurement sheet. In the present embodiment, the image signal acquisition unit 22 acquires the R signal as the first image signal of the captured image of the measurement sheet and acquires the R signal, the G signal, and the B signal as the second image signal.

Similarly, the image signal acquisition unit 22 acquires one or two or more first image signals corresponding to one or two or more spectral sensitivities from each of the image signals of the captured images of the two or more patches. Furthermore, the image signal acquisition unit 22 acquires one or two or more second image signals that correspond to one or two or more spectral sensitivities and that have at least one spectral sensitivity different from the first image signal, from each of the image signals of the captured images of the two or more patches. In the present embodiment, the image signal acquisition unit 22 acquires the R signal as the first image signals of the captured images of the patches and acquires the R signal, the G signal, and the B signal as the second image signals.

The ratio calculation unit 24 calculates a ratio of the image signal (color signal) of the captured image of the measurement sheet. Similarly, the ratio calculation unit 24 calculates ratios of the image signals (color signals) of the captured images of the patches.

More specifically, in a case where one first image signal is acquired by the image signal acquisition unit 22, the ratio calculation unit 24 sets the one first image signal as a third image signal. On the other hand, in a case where two or more first image signals are acquired, the ratio calculation unit 24 generates the third image signal by calculating a total of the two or more first image signals for each pixel. That is, total values of pixel values of corresponding pixels of the two or more first image signals are pixel values of corresponding pixels of the third image signal.

Similarly, in a case where one second image signal is acquired by the image signal acquisition unit 22, the ratio calculation unit 24 sets the one second image signal as a fourth image signal. On the other hand, in a case where two or more second image signals are acquired, the ratio calculation unit 24 generates the fourth image signal by calculating a total of the two or more second image signals for each pixel. That is, total values of pixel values of corresponding pixels of the two or more second image signals are pixel values of corresponding pixels of the fourth image signal.

The ratio calculation unit 24 generates a fifth image signal by calculating a ratio between the third image signal and the fourth image signal for each pixel. That is, ratios of the pixel values of the pixels of the third image signal and the pixel values of the corresponding pixels of the fourth image signal are pixel values of corresponding pixels of the fifth image signal.

A method for calculating the total of the pixel values is not limited to arithmetic addition and may be other methods for calculating the total such as arithmetic averaging.

In the present embodiment, based on a calculation expression of the ratio of the color signal decided in advance, the image signal acquisition unit 22 acquires the first image signal and the second image signal, and the ratio calculation unit generates the third image signal and the fourth image signal based on the first image signal and the second image signal and calculates the fifth image signal, that is, the ratio between the third image signal and the fourth image signal, based on the third image signal and the fourth image signal.

Here, Calculation Expressions 1 to 4 below are illustrated as an example of calculation expressions of a ratio R' of the R signal, a ratio G' of the G signal, and a ratio B' of the B signal.

$$\text{Calculation Expression 1: } R' = R/Y, \, G' = G/Y, \, B' = B/Y, \text{ and } Y = R + G + B$$

$$\text{Calculation Expression 2: } R' = R/(G + B), \, G' = G/(R + B), \text{ and } B' = B/(R + G)$$

$$\text{Calculation Expression 3: } R' = R/G, \, G' = G/R, \text{ and } B' = B/G$$

$$\text{Calculation Expression 4: } R' = R/B, \, G' = G/B, \text{ and } B' = B/R$$

The present invention is not limited to Calculation Expressions 1 to 4 above. Numerators of the calculation expressions may include one first image signal as the third image signal or the third image signal generated by calculating the total of two or more first image signals for each pixel. On the other hand, denominators of the calculation expressions may include one second image signal as the fourth image signal or the fourth image signal generated by calculating the total of two or more second image signals for each pixel, in which the one second image signal or the two or more second image signals have at least one spectral sensitivity different from the first image signal.

While a method for deciding the calculation expression is not particularly limited, the ratios R', G', and B' are calculated using, for example, Calculation Expressions 1 to 4, and one calculation expression that is most suitable for a color developing characteristic of the measurement sheet, a spectral sensitivity characteristic of the sensor, and the like is selected from Calculation Expressions 1 to 4 based on a relationship between the ratios R', G', and B' and the external energy amount applied to the measurement sheet. For example, a calculation expression in which the relationship between the ratio and the external energy amount is monotonically increased or monotonically decreased may be selected, or a calculation expression having strong linearity may be selected.

The monotonic increase or monotonic decrease of the relationship between the ratio and the external energy amount means that a change in the external energy amount with respect to a change in the ratio is monotonically increased or monotonically decreased without repeating increases or decreases.

For example, in a case where a line graph representing the relationship between the ratio and the external energy amount is approximated to a straight line, strongness and weakness of the linearity are decided by a magnitude of a correlation between the linearly approximated straight line and each point representing the relationship between the ratio and the external energy amount. The magnitude of the correlation represents a magnitude of an amount of deviation between the linearly approximated straight line and each point representing the relationship between the ratio and the external energy amount. As the strength of the linearity is increased, the amount of deviation is reduced, and the correlation is increased. In addition, as accuracy required in deriving the surface distribution of the external energy amount from the ratio is increased, a higher correlation is required.

In the present embodiment, the ratio R' = R/Y of the R signal and Y = R + G + B in Calculation Expression 1 are selected as the calculation expression. In this case, the image signal acquisition unit 22 acquires the R signal as the first image signal and acquires the R signal, the G signal, and the B signal as the second image signals. The ratio calculation unit sets the R signal as the third image signal, generates the fourth image signal by calculating the total of the R signal, the G signal, and the B signal for each pixel, and generates the fifth image signal by calculating the ratio R' of the third image signal and the fourth image signal using Calculation Expression 1.

The calibration curve creation unit 28 creates the calibration curve based on a relationship between the external energy amount applied to the measurement sheet and the fifth image signal generated from the image signals of the captured images of the patches. The fifth image signal and the external energy amount are in a mapping relationship in which the external energy amount is uniquely determined based on the fifth image signal. This mapping relationship is known. The calibration curve creation unit 28 creates the calibration curve in advance based on the mapping relationship. For example, the calibration curve can be composed of a look up table (LUT).

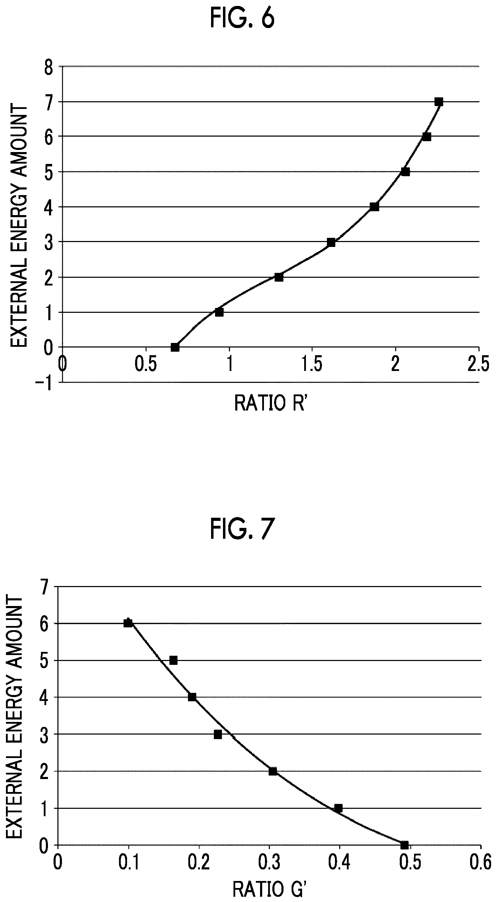

Fig. 6 is a graph of a calibration curve representing the relationship between the ratio R' of an R signal of a captured image of a measurement sheet 1 and an external energy amount applied to the measurement sheet 1. In the graph, a horizontal axis represents the ratio R' of the R signal of the captured image of the measurement sheet 1, and a vertical axis represents the external energy amount applied to the measurement sheet 1. In this graph, in a case where the ratio R' is increased within a range of approximately 0.7 to 2.3, the external energy amount is subsequently increased within a range of 0 to 7. That is, the calibration curve of the ratio R' of the R signal of the captured image of the measurement sheet 1 changes in an upper right direction.

Fig. 7 is a graph of a calibration curve representing a relationship between the ratio G' of a G signal of a captured image of a measurement sheet 2 and an external energy amount applied to the measurement sheet 2. In the graph, a horizontal axis represents the ratio G' of the G signal of the captured image of the measurement sheet 2, and a vertical axis represents the external energy amount applied to the measurement sheet 2. In this graph, in a case where the ratio G' is increased within a range of 0.1 to 0.5, the external energy amount is subsequently decreased within a range of 6 to 0. That is, the calibration curve of the ratio G' of the G signal of the captured image of the measurement sheet 2 changes in a lower right direction.

In accordance with the above, the relationship between the ratio and the external energy amount in the calibration curve varies between the measurement sheets 1 and 2 depending on color developing characteristics thereof. Accordingly, the calibration curve creation unit 28 creates a calibration curve corresponding to a measurement sheet to be measured in advance using the calculation expression decided in advance.

The surface distribution derivation unit 30 derives the surface distribution of the external energy amount applied to the measurement sheet based on the fifth image signal, that is, the ratio between the third image signal and the fourth image signal of the captured image of the measurement sheet. In the present embodiment, the surface distribution derivation unit 30 derives the surface distribution of the external energy amount applied to the measurement sheet from the fifth image signal using the calibration curve created by the calibration curve creation unit 28.

The display processing unit 32 displays various images, information, and the like on the display unit 14. In the present embodiment, for example, in a case where the measurement sheet and the chart are imaged in accordance with an operation (imaging instruction) of the user, the display processing unit 32 displays the images on the display unit 14.

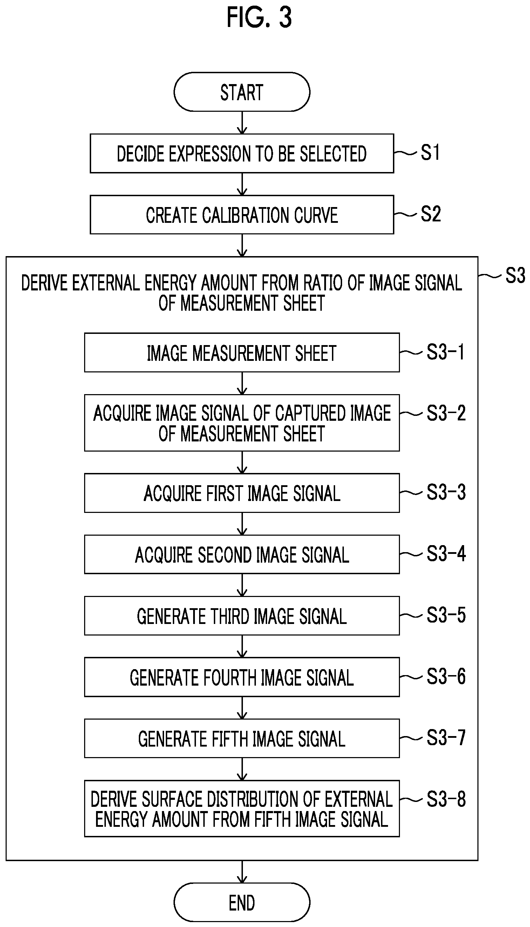

Next, an operation of the image processing apparatus 10 will be described with reference to the flowchart illustrated in Fig. 3.

In the following description, it is assumed that the calibration curve is created from eight patches that have developed colors of different densities using Calculation Expression 1 for calculating the ratio R', and that the external energy amount applied to the measurement sheet is derived from the ratio R' (fifth image signal) of the R signal of the captured image of the measurement sheet to be measured using the calibration curve.

First, the expression to be selected for creating the calibration curve is decided in advance as a preparation before deriving the external energy amount from the ratio of the image signal of the measurement sheet to be measured (step S 1).

In this case, the user images the measurement sheet that has developed the color of the predetermined density corresponding to the external energy amount under application of the external energy, under any illumination light L1. For example, the user holds the image processing apparatus 10 that is a smartphone in hand and provides the imaging instruction of the measurement sheet by performing an operation of the user through the operating unit 16 while viewing the image of the measurement sheet displayed on the display unit 14.

Accordingly, the measurement sheet is imaged by the sensor of the imaging unit 12. The color image signal consisting of the R signal, the G signal, and the B signal of the captured image of the measurement sheet is acquired by the image signal acquisition unit 22.

Next, the ratios R', G', and B' of the captured image of the measurement sheet are calculated by the ratio calculation unit 24 using Calculation Expressions 1 to 4 above, and for example, Calculation Expression 1 of the ratio R' of the R signal is selected from Calculation Expressions 1 to 4 based on the relationship between the ratios R', G', and B' and the external energy amount applied to the measurement sheet. Accordingly, one calculation expression most suitable for the color developing characteristic of the measurement sheet to be measured and the spectral sensitivity characteristic of the sensor is decided.

Next, the calibration curve corresponding to the measurement sheet to be measured is also created in advance as a preparation (step S2).

In this case, the user images the chart including the eight patches that have developed colors of different densities, under the same illumination light L 1.

Accordingly, the chart is also imaged by the sensor of the imaging unit 12. Next, by the image signal acquisition unit 22, captured images of the eight patches corresponding to regions of the eight patches are extracted from the captured image of the chart, and the color image signal consisting of the R signal, the G signal, and the B signal of each of the captured images of the eight patches is acquired. From each of the image signals of the captured images of the eight patches, the R signal is acquired as the first image signal, and the R signal, the G signal, and the B signal are acquired as the second image signals.

Next, by the ratio calculation unit 24, the R signal is set as the third image signal, and a Y signal (Y = R + G + B) is generated as the fourth image signal by calculating the total of the R signal, the G signal, and the B signal for each pixel. The fifth image signal of each of the captured images of the eight patches is generated by calculating the ratio R' = R/Y of the R signal and the Y signal for each pixel using Calculation Expression 1 of the ratio R'. Accordingly, eight fifth image signals, that is, eight ratios R', of the captured images of the eight patches are calculated.

Next, the calibration curve of the ratio R' is created by the calibration curve creation unit 28 based on a relationship between the eight ratios R' and corresponding eight external energy amounts applied to the measurement sheet.

More specifically, as illustrated in Fig. 6, in the graph representing the relationship between the ratio R' and the external energy amount, eight discrete points representing the relationship between the eight ratios R' and the corresponding eight external energy amounts applied to the measurement sheet are decided. The calibration curve of the ratio R' is created by interpolating the eight discrete points using well-known interpolation technology. For example, interpolation within a range of the eight points is performed using cubic spline interpolation technology or the like, and interpolation outside the range of the eight points is performed using extrapolation technology or the like.

Next, the external energy amount is derived from the ratio of the image signal of the measurement sheet to be measured (step S3).

In this case, the user images the measurement sheet that has developed the color of the predetermined density corresponding to the external energy amount under application of the external energy, under the same illumination light L1.

Accordingly, the measurement sheet is also imaged by the sensor of the imaging unit 12 (step S3-1). Next, the color image signal consisting of the R signal, the G signal, and the B signal of the captured image of the measurement sheet is acquired by the image signal acquisition unit 22 (step S3-2). From the image signal of the captured image of the measurement sheet, the R signal is acquired as the first image signal (step S3-3), and the R signal, the G signal, and the B signal are acquired as the second image signals (step S3-4).

Next, by the ratio calculation unit 24, the R signal is set as the third image signal (step S3-5), and the Y signal (Y = R + G + B) is generated as the fourth image signal by calculating the total of the R signal, the G signal, and the B signal for each pixel (step S3-6). The fifth image signal of the captured image of the measurement sheet is generated by calculating the ratio R' = R/Y of the R signal and the Y signal for each pixel using Calculation Expression 1 of the ratio R' (step S3-7). Accordingly, the fifth image signal, that is, the ratio R', of the captured image of the measurement sheet is calculated.

The surface distribution of the external energy amount applied to the measurement sheet is derived from the fifth image signal by the surface distribution derivation unit 30 using the calibration curve (step S3-8).

In addition, for other measurement sheets to be measured, the external energy amount can also be derived from the ratio of the image signal of the measurement sheet to be measured using the same Calculation Expression 1 of R' and the same calibration curve.

The R signal, the G signal, and the B signal of the color image signal are represented by the following expressions.

$$R = rr * Yr * SD(x, y)$$

$$G = gg * Yg * SD(x, y)$$

$$B = bb * Yb * SD(x, y)$$

Here, rr, gg, and bb are reflectivity (color components) of the R signal, the G signal, and the B signal. Yr, Yg, and Yb are light quantities (brightness components) of the R signal, the G signal, and the B signal. SD(x, y) is unevenness components of the R signal, the G signal, and the B signal caused by unevenness in a surface distribution of intensity of the illumination light at coordinates (x, y).

For example, the ratio R' of the R signal is represented by the following expression.

$$R' = R/(R + G + B)$$
$$= rr * Yr * SD(x, y)/(rr * Yr * SD(x, y) + gg * Yg * SD(x, y) + bb * Yb * SD(x, y))$$
$$= rr * Yr * SD(x, y)/(rr * Yr + gg * Yg + bb * Yb) * SD(x, y)$$
$$= rr * Yr/(rr * Yr + gg * Yg + bb * Yb)$$

Assuming that the light quantities Yr, Yg, and Yb are the same as Ys, that is, Yr = Yg = Yb = Ys, the ratio R' is represented by the following expression.

$$R' = rr * Ys/(rr * Ys + gg * Ys + bb * Ys)$$
$$= rr * Ys/(rr + gg + bb) * Ys$$
$$= rr/(rr + gg + bb)$$

In accordance with the above, in the ratio R', the brightness component and the unevenness component are canceled out, and only the color component is left.

The measurement sheet develops the color of the predetermined density corresponding to the external energy amount under application of the external energy. However, in a case where a density value is increased, the color component and the brightness component are increased in conjunction with each other. Accordingly, even in a case where the external energy amount is derived from the ratio R' that does not have the brightness component and the unevenness component and includes only the color component, the external energy amount can be accurately derived to the same extent as in a case where the external energy amount is derived from the density value.

In addition, the unevenness component is canceled out by calculating the ratio R' of the image signal. Thus, even without performing shading correction based on an image for the shading correction, unevenness in a surface distribution of a density of the captured image of the measurement sheet caused by the unevenness in the surface distribution of the intensity of the illumination light can be eliminated as in a case where the shading correction is performed. In addition, the user can accurately derive the external energy amount applied to the measurement sheet from the color optical density of the measurement sheet without considering the unevenness in the surface distribution of the intensity of the illumination light.

In steps S1 to S3, it is not necessary to use the same illumination light L1. More specifically, while the illumination light has two attributes of the surface distribution of the intensity and a spectral distribution (spectrum), the surface distribution of the intensity of the illumination light does not need to be the same in steps S1 to S3. That is, the measurement sheet can be imaged without considering the unevenness in the surface distribution of the intensity of the illumination light. On the other hand, in steps S1 to S3, the spectral distribution of the illumination light needs to be matched. The reason for this is that a density (tint) corresponding to spectral reflectivity of the coloring material of the measurement sheet looks different in a case where the spectral distribution of the illumination light changes in steps S1 to S3.

In addition, in a case where the mapping relationship, that is, the linearity of the relationship between the fifth image signal and the external energy amount, in the calibration curve is strong, the calibration curve may be created using a chart substantially including only one patch of a determined density. In this case, as described above, the calibration curve is created by the calibration curve creation unit 28 based on the one patch included in the chart and the white patch using the white background region other than the region of the one patch included in the chart.

More specifically, the calibration curve is created by connecting a point representing the relationship between the ratio R' of the image signal of the captured image of the one patch and the corresponding external energy amount to a point representing the relationship between the ratio R' of the image signal of the captured image of the white patch and the corresponding external energy amount with a straight line in the graph representing the relationship between the ratio R' and the external energy amount. In a case of Calculation Expression 1 of the ratio R', the ratio R' of the image signal of the captured image of the white patch is ratio R' = R/Y (Y = R + G + B) = 1/3 ~ 0.3 in a case where the R signal, the G signal, and the B signal of the captured image of the white patch satisfy R = G = B = 1. Accordingly, the point representing the relationship between the ratio R' of the image signal of the captured image of the white patch and the corresponding external energy amount is decided by ratio R' $\approx$ 0.3 and, for example, external energy amount = 0 corresponding to the ratio R' of the image signal of the captured image of the white patch in the graph representing the relationship between the ratio R' and the external energy amount.

As described above, in a case where the linearity of the mapping relationship in the calibration curve is strong, the number of patches included in the chart may be reduced. Conversely, in a case where nonlinearity is strong, it is preferable to increase the number of patches. That is, as strength of the nonlinearity is increased, it is preferable to increase the number of patches. Accordingly, even in a case where the nonlinearity is strong, the external energy amount can be derived with high accuracy from the fifth image signal.

In addition, in a case where strongness and weakness of the nonlinearity are present depending on a range of the mapping relationship in the calibration curve, it is preferable to increase the number of patches within a strong range of the nonlinearity and reduce the number of patches within a weak range of the nonlinearity. That is, it is preferable that the number of patches is larger within the strong range of the nonlinearity than within a strong range of the linearity. Accordingly, the external energy amount can be derived from the ratio with high accuracy even within the strong range of the nonlinearity.

In addition, the measurement sheet and the chart may be imaged at the same time by imaging the measurement sheet including the chart illustrated in Fig. 4. In this case, both of the measurement sheet and the chart can be imaged by performing imaging once. Alternatively, the measurement sheet and the chart may be separately imaged by imaging the chart illustrated in Fig. 5 before imaging the measurement sheet or after imaging the measurement sheet.

In addition, the fifth image signal of the captured image of the patch may be directly associated with the external energy amount. Alternatively, a normalization unit may be provided, and the normalization unit may normalize the fifth image signal of the captured image of the patch in accordance with, for example, a standard status of the density and associate the fifth image signal after the normalization with the external energy amount. That is, the fifth image signal of the captured image of the patch may be indirectly associated with the external energy amount.

In addition, the captured image of the measurement sheet includes shape distortion such as shape distortion caused by aberration of a lens and shape distortion caused by tilting at a time of imaging. Accordingly, a shape distortion correction unit may be provided, and the shape distortion correction unit may correct the shape distortion of the captured image of the measurement sheet after the acquisition of the image signal of the captured image of the measurement sheet and before the acquisition of the first image signal, and the ratio calculation unit 24 may generate the fifth image signal from the image signal of the captured image of the measurement sheet after the correction of the shape distortion.

The shape distortion caused by the aberration of the lens can be corrected using, but not particularly limited to, the well-known Zhang's method (Zhengyou Zhang, "A Flexible New Technique for Camera Calibration", Microsoft Research Technical Report, MSR-TR-98-71, December 2, 1998.). In addition, the shape distortion caused by tilting at the time of imaging can be corrected using well-known tilting correction (perspective shape correction) based on four vertices of a captured image of a rectangular patch included in the captured image of the chart.

In addition, a gradation transformation unit may be provided, and the gradation transformation unit may perform gradation transformation of transforming the image signal of the captured image of the measurement sheet from an image signal of linear brightness to an image signal having a gamma curve after the acquisition of the image signal of the captured image of the measurement sheet and before the acquisition of the first image signal. The gradation transformation may be performed after the shape distortion is corrected, or the shape distortion may be corrected after the gradation transformation is performed.

In a case where the ratio of the image signal having a gamma curve is calculated, the unevenness component is not completely canceled out in a strict sense. However, an effect of the shading correction can be obtained as in a case where the ratio of the image signal of linear brightness is calculated. However, it is preferable to generate the fifth image signal from the image signal of the captured image of the measurement sheet of linear brightness on which the gradation transformation is not performed, because the effect of the shading correction can be obtained with higher accuracy.

Next, specific examples of the captured image of the measurement sheet created based on the ratio of the image signal will be illustratively described.

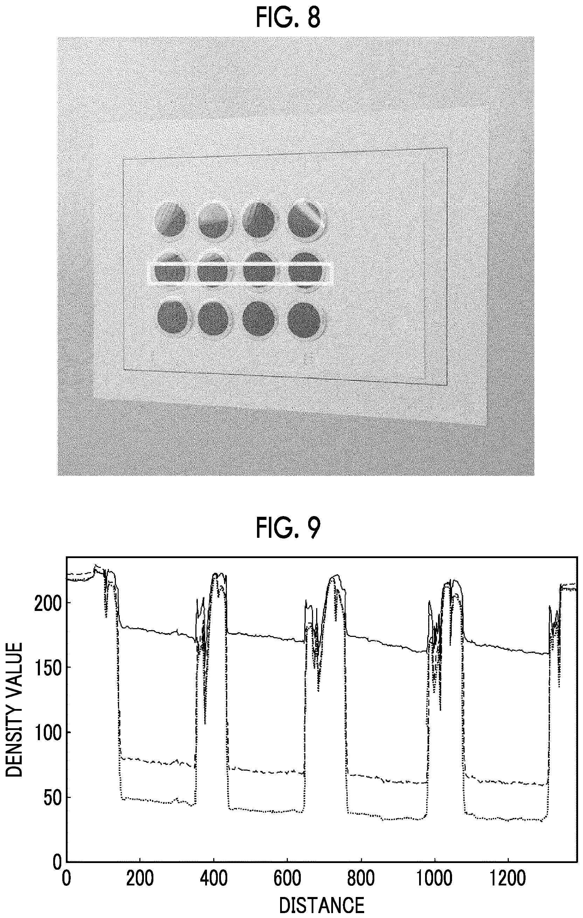

Fig. 8 is a concept diagram representing a configuration of a measurement sheet of a first example. A plurality of color developing portions of a circular shape and a red color that have developed the color of the predetermined density corresponding to the external energy amount under application of the external energy are formed on one surface of the measurement sheet of the first example. The measurement sheet of the first example is illuminated with the illumination light such that the measurement sheet is relatively bright on a left side and becomes relatively dark toward a right side.

Fig. 9 is a graph representing an image signal of a captured image of the measurement sheet of the first example. In the graph, a horizontal axis represents a distance from the left side toward the right side of the measurement sheet illustrated in Fig. 8, and a vertical axis represents the R signal, the G signal, and the B signal (density value) of a part surrounded by a quadrangular frame in the captured image of the measurement sheet illustrated in Fig. 8. In the graph in Fig. 9, a waveform illustrated by a solid line on an upper side is the R signal, a waveform illustrated by a broken line in the middle is the B signal, and a waveform illustrated by a dotted line on a lower side is the G signal. As illustrated in the graph, the R signal, the G signal, and the B signal in the color developing portion are increased toward the relatively bright left side and are reduced toward the relatively dark right side.

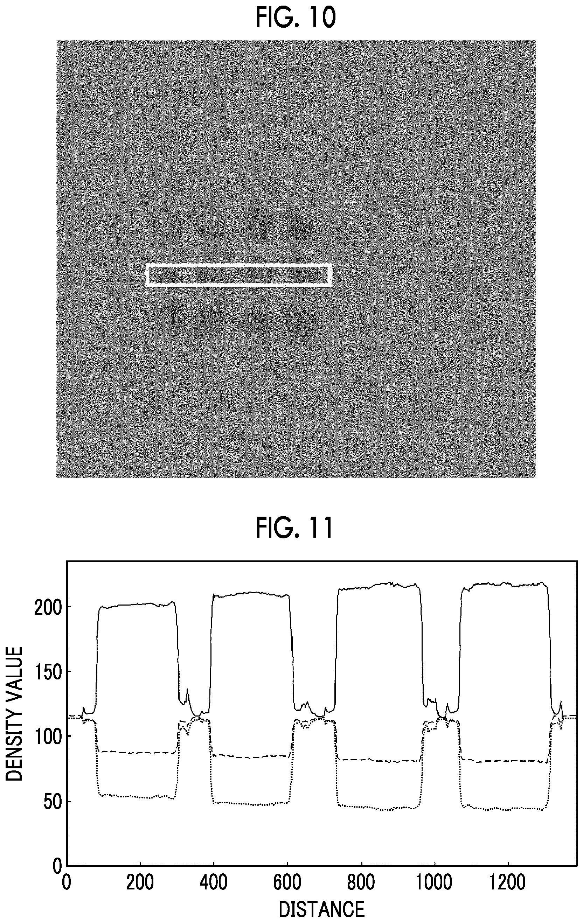

On the other hand, Fig. 10 is a concept diagram representing a configuration of the captured image of the measurement sheet of the first example based on the ratio of the image signal. More specifically, Fig. 10 represents the captured image of the measurement sheet created based on the ratio R' by calculating the ratio R' of the image signal using Calculation Expression 1 after performing the gradation transformation on the image signal. In the captured image of the measurement sheet created based on the ratio R', the brightness component and the unevenness component are canceled out, and only the color component is left. However, in the illustration of Fig. 10, an offset is applied to the brightness component so that the color developing portion can be visually recognized.

Fig. 11 is a graph representing the image signal of the captured image of the measurement sheet of the first example based on the ratio of the image signal. In the graph, a horizontal axis represents a distance from the left side toward the right side of the measurement sheet illustrated in Fig. 10, and a vertical axis represents the original R signal, G signal, and B signal (density value) included in Calculation Expression 1 used for calculating the ratio R' of the part surrounded by the quadrangular frame in the captured image of the measurement sheet illustrated in Fig. 10. In the graph in Fig. 10, a waveform illustrated by a solid line on an upper side is the R signal, a waveform illustrated by a broken line in the middle is the B signal, and a waveform illustrated by a dotted line on a lower side is the G signal. As illustrated in the graph, the R signal, the G signal, and the B signal in the color developing portion have the same value over all regions of the captured image of the measurement sheet in a left-right direction.

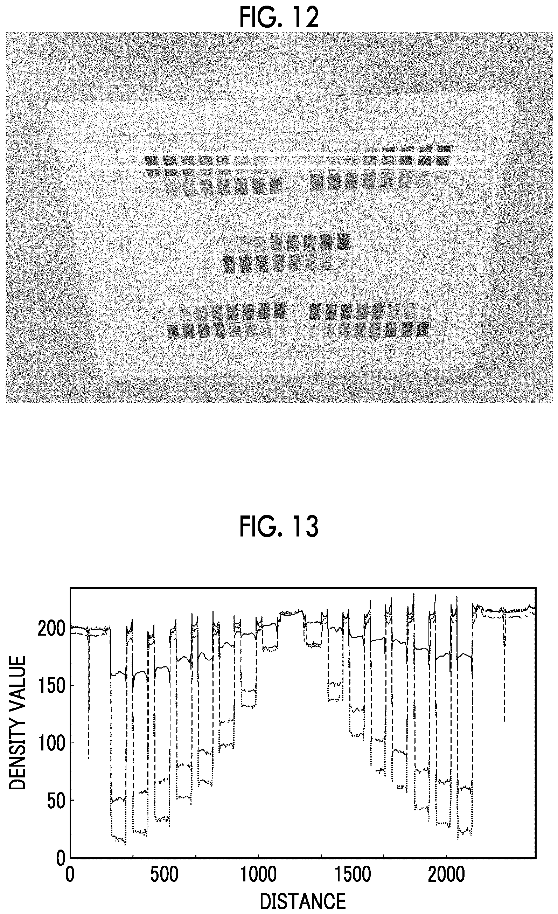

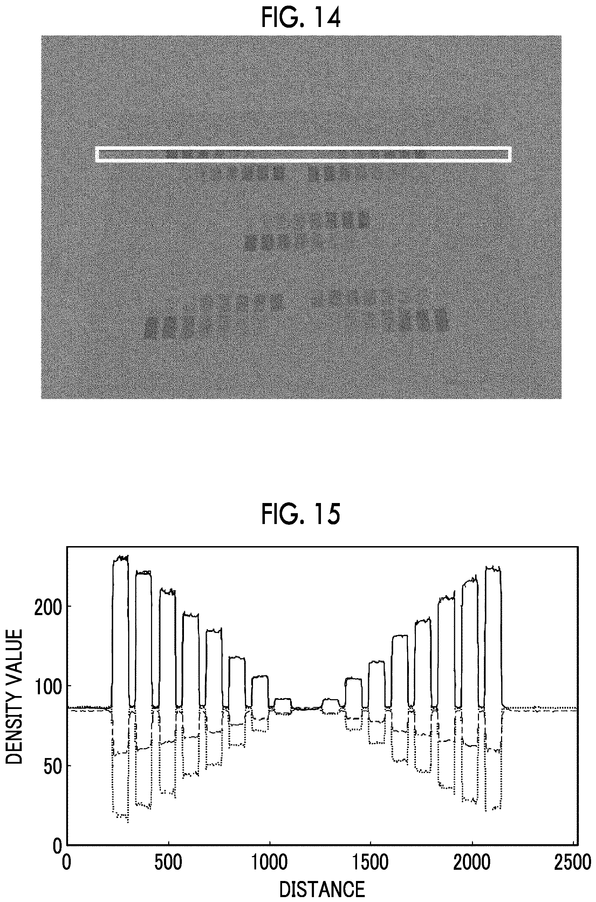

Fig. 12 to Fig. 15 relate to a measurement sheet of a second example and correspond to the measurement sheet of the first example in Fig. 8 to Fig. 11. However, the measurement sheet of the second example is illuminated with the illumination light such that the measurement sheet is relatively bright on an upper side and is relatively dark on a lower side.

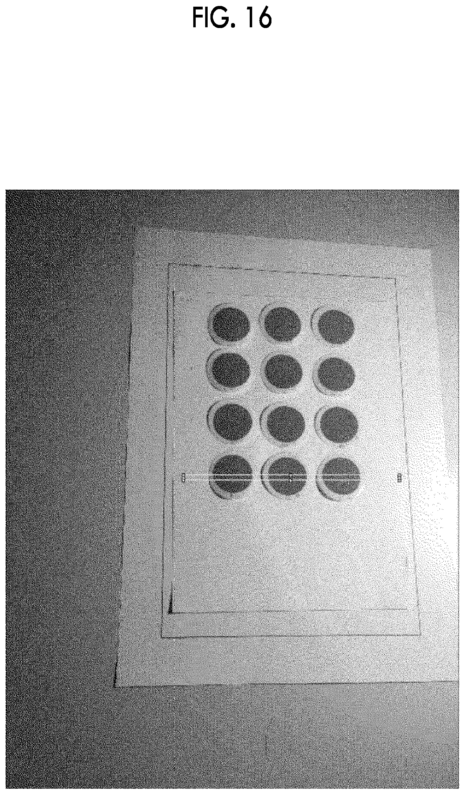

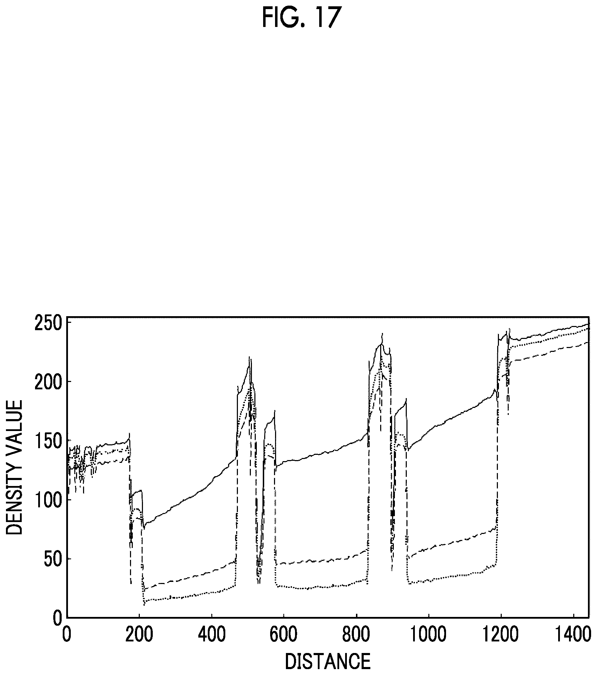

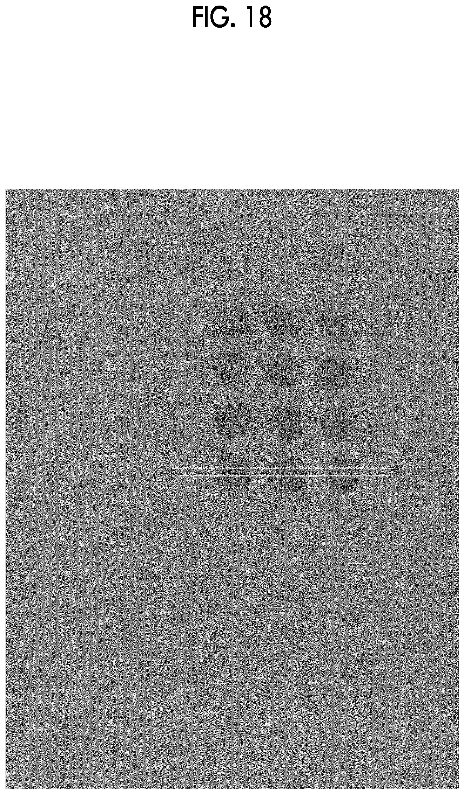

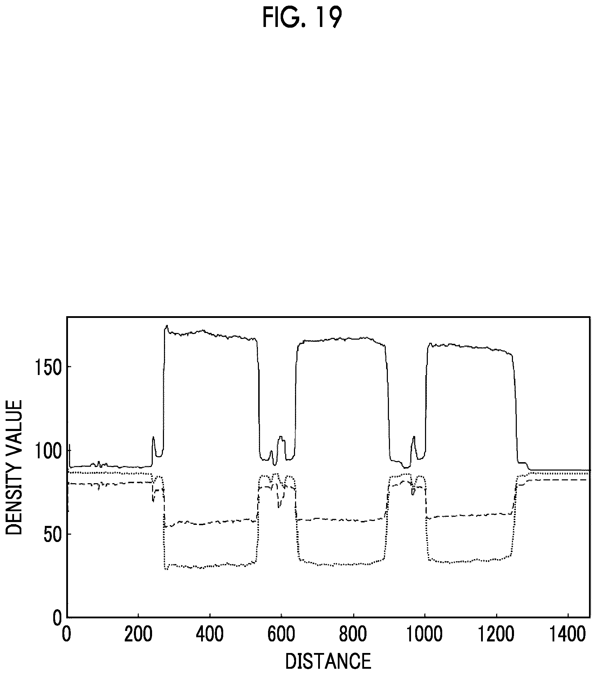

In addition, Fig. 16 to Fig. 19 relate to a measurement sheet of a third example and also correspond to the measurement sheet of the first example in Fig. 8 to Fig. 11. However, the measurement sheet of the third example is illuminated with the illumination light such that the measurement sheet is relatively bright on a right side and is relatively dark on a left side.

Even in the second example and the third example, the R signal, the G signal, and the B signal included in the ratio R' in the color developing portion have the same value over all regions of the captured image of the measurement sheet in the left-right direction as in the first example.

In accordance with the above, from Examples 1 to 3, it is possible to check that the brightness component and the unevenness component are canceled out, and only the color component is left by calculating the ratio, and unevenness in a surface distribution of the density value of the captured image of the measurement sheet can be eliminated regardless of the unevenness in the surface distribution of the intensity of the illumination light. In addition, it is possible to check that the effect of the shading correction can be obtained even in a case where the ratio R' is generated from the image signal of the captured image of the measurement sheet after the gradation transformation as described above.

The image processing apparatus according to the embodiment of the present invention is not limited to a smartphone and may be a digital camera, a digital video camera, a scanner, or the like or can be implemented as an application program operating on these apparatuses.

Examples of the processor include a central processing unit (CPU) that is a general-purpose processor functioning as various processing units by executing software (program), a programmable logic device (PLD) such as a field programmable gate array (FPGA) that is a processor having a circuit configuration changeable after manufacturing, and a dedicated electric circuit such as an application specific integrated circuit (ASIC) that is a processor having a circuit configuration dedicatedly designed to execute specific processing.

One processing unit may be composed of one of the various processors or may be composed of a combination of two or more processors of the same type or different types, for example, a combination of a plurality of FPGAs or a combination of an FPGA and a CPU. In addition, a plurality of processing units may be composed of one of the various processors, or two or more of the plurality of processing units may be collectively configured using one processor.

For example, as represented by a computer such as a server and a client, a form in which one processor is composed of a combination of one or more CPUs and software and the processor functions as the plurality of processing units is possible. In addition, as represented by a system on chip (SoC) and the like, a form of using a processor that implements functions of the entire system including the plurality of processing units in one integrated circuit (IC) chip is possible.

Furthermore, a hardware configuration of the various processors is more specifically an electric circuit (circuitry) in which circuit elements such as semiconductor elements are combined.

In addition, for example, the method according to the embodiment of the present invention can be implemented by a program causing a computer (processor) to execute each step of the method. In addition, a computer readable recording medium on which the program is recorded can also be provided.

While the present invention has been described in detail so far, the present invention is not limited to the embodiment and may be subjected to various improvements and changes without departing from the gist of the present invention.

Explanation of References

10: image processing apparatus
12: imaging unit
14: display unit
16: operating unit
18: storage unit
20: processor
22: image signal acquisition unit
24: ratio calculation unit
28: calibration curve creation unit
30: surface distribution derivation unit
32: display processing unit
34: internal bus

**Claims**

1. An image processing method comprising:

   acquiring an image signal of a captured image obtained by imaging a measurement sheet that has developed a color of a density corresponding to an external energy amount under application of external energy, using a sensor having a plurality of different spectral sensitivities;
   acquiring one or two or more first image signals corresponding to one or two or more spectral sensitivities from the image signal of the captured image;
   acquiring one or two or more second image signals that correspond to the one or two or more spectral sensitivities and that have at least one spectral sensitivity different from the first image signal, from the image signal of the captured image;
   setting the one first image signal as a third image signal or generating the third image signal by calculating a total of the two or more first image signals for each pixel;
   setting the one second image signal as a fourth image signal or generating the fourth image signal by calculating a total of the two or more second image signals for each pixel;
   generating a fifth image signal by calculating a ratio between the third image signal and the fourth image signal for each pixel; and
   deriving a surface distribution of the external energy amount applied to the measurement sheet based on the fifth image signal.

2. The image processing method according to claim 1,
   wherein the plurality of spectral sensitivities are an R sensitivity, a G sensitivity, and a B sensitivity.

3. The image processing method according to claim 1 or 2,
   wherein the fifth image signal and the external energy amount are in a mapping relationship in which the external energy amount is uniquely determined based on the fifth image signal, and a calibration curve is created in advance based on the mapping relationship.

4. The image processing method according to claim 3,
   wherein the surface distribution of the external energy amount applied to the measurement sheet is derived from the fifth image signal using the calibration curve.

5. The image processing method according to claim 3 or 4,
   wherein the calibration curve is created based on a relationship between the external energy amount applied to the measurement sheet and the fifth image signal generated from an image signal of a captured image obtained by imaging, using the sensor, a patch that is created on the measurement sheet and that has developed a color under application of the external energy amount to the measurement sheet on conditions of different external energy amounts, or a patch that is created on a sheet different from the measurement sheet using the same coloring material as the measurement sheet and that has developed a color of the same density as the patch created on the measurement sheet.

6. The image processing method according to claim 5,
   wherein the conditions of the different external energy amounts include a condition in which the external energy is not applied to the measurement sheet.

7. The image processing method according to claim 5 or 6,
   wherein as strength of nonlinearity of the mapping relationship in the calibration curve is increased, the number of the patches is increased.

8. The image processing method according to any one of claims 5 to 7,
   wherein the number of the patches is larger within a strong range of nonlinearity of the mapping relationship in the calibration curve than within a strong range of linearity of the mapping relationship in the calibration curve.

9. The image processing method according to any one of claims 1 to 8,

   wherein shape distortion of the captured image of the measurement sheet is corrected after the acquisition of the image signal of the captured image of the measurement sheet and before the acquisition of the first image signal, and
   the fifth image signal is generated from the image signal of the captured image of the measurement sheet after the correction of the shape distortion.

10. The image processing method according to any one of claims 1 to 8,

    wherein gradation transformation of transforming the image signal of the captured image of the measurement sheet from an image signal of linear brightness to an image signal having a gamma curve is not performed after the acquisition of the image signal of the captured image of the measurement sheet and before the acquisition of the first image signal, and
    the fifth image signal is generated from the image signal of the captured image of the measurement sheet on which the gradation transformation is not performed.

11. An image processing apparatus comprising:

    a processor,
    wherein the processor is configured to:

    acquire an image signal of a captured image obtained by imaging a measurement sheet that has developed a color of a density corresponding to an external energy amount under application of external energy, using a sensor having a plurality of different spectral sensitivities;
    acquire one or two or more first image signals corresponding to one or two or more spectral sensitivities from the image signal of the captured image;
    acquire one or two or more second image signals that correspond to the one or two or more spectral sensitivities and that have at least one spectral sensitivity different from the first image signal, from the image signal of the captured image;
    set the one first image signal as a third image signal or generate the third image signal by calculating a total of the two or more first image signals for each pixel;
    set the one second image signal as a fourth image signal or generate the fourth image signal by calculating a total of the two or more second image signals for each pixel;
generate a fifth image signal by calculating a ratio between the third image signal and the fourth image signal for each pixel; and
derive a surface distribution of the external energy amount applied to the measurement sheet based on the fifth image signal.

**12.** A program causing a computer to execute each step of the image processing method according to any one of claims 1 to 10.

**13.** A computer readable recording medium on which a program causing a computer to execute each step of the image processing method according to any one of claims 1 to 10 is recorded.

**Amended claims under Art. 19.1 PCT**

**1.** An image processing method comprising:

acquiring an image signal of a captured image obtained by imaging a measurement sheet that has developed a color of a density corresponding to an external energy amount under application of external energy, using a sensor having a plurality of different spectral sensitivities;
acquiring one or two or more first image signals corresponding to one or two or more spectral sensitivities from the image signal of the captured image;
acquiring one or two or more second image signals that correspond to the one or two or more spectral sensitivities and that have at least one spectral sensitivity different from the first image signal, from the image signal of the captured image;
setting the one first image signal as a third image signal or generating the third image signal by calculating a total of the two or more first image signals for each pixel;
setting the one second image signal as a fourth image signal or generating the fourth image signal by calculating a total of the two or more second image signals for each pixel;
generating a fifth image signal by calculating a ratio between the third image signal and the fourth image signal for each pixel; and
deriving a surface distribution of the external energy amount applied to the measurement sheet based on the fifth image signal.

**2.** The image processing method according to claim 1,
wherein the plurality of spectral sensitivities are an R sensitivity, a G sensitivity, and a B sensitivity.

**3.** The image processing method according to claim 1 or 2,
wherein the fifth image signal and the external energy amount are in a mapping relationship in which the external energy amount is uniquely determined based on the fifth image signal, and a calibration curve is created in advance based on the mapping relationship.

**4.** The image processing method according to claim 3,
wherein the surface distribution of the external energy amount applied to the measurement sheet is derived from the fifth image signal using the calibration curve.

**5.** The image processing method according to claim 3 or 4,
wherein the calibration curve is created based on a relationship between the external energy amount applied to the measurement sheet and the fifth image signal generated from an image signal of a captured image obtained by imaging, using the sensor, a patch that is created on the measurement sheet and that has developed a color under application of the external energy amount to the measurement sheet on conditions of different external energy amounts, or a patch that is created on a sheet different from the measurement sheet using the same coloring material as the measurement sheet and that has developed a color of the same density as the patch created on the measurement sheet.

**6.** The image processing method according to claim 5,
wherein the conditions of the different external energy amounts include a condition in which the external energy is not applied to the measurement sheet.

**7.** The image processing method according to claim 5 or 6,
wherein as strength of nonlinearity of the mapping relationship in the calibration curve is increased, the number of the patches is increased.

**8.** The image processing method according to any one of claims 5 to 7,
wherein the number of the patches is larger within a strong range of nonlinearity of the mapping relationship in the calibration curve than within a strong range of linearity of the mapping relationship in the calibration curve.

**9.** The image processing method according to any one of claims 1 to 8,

wherein shape distortion of the captured image of the measurement sheet is corrected after the acquisition of the image signal of the captured image of the measurement sheet and before the acquisition of the first image signal, and
the fifth image signal is generated from the image signal of the captured image of the measurement sheet after the correction of the shape distortion.

**10.** The image processing method according to any one of claims 1 to 8,

wherein gradation transformation of transforming the image signal of the captured image of the measurement sheet from an image signal of linear brightness to an image signal having a gamma curve is not performed after the acquisition of the image signal of the captured image of the measurement sheet and before the acquisition of the first image signal, and
the fifth image signal is generated from the image signal of the captured image of the measurement sheet on which the gradation transformation is not performed.

**11.** The image processing method according to any one of claims 1 to 10,
wherein a surface distribution of the external energy amount applied to the measurement sheet is derived based on the one fifth image signal constituted of the ratio calculated for each pixel.

**12.** An image processing apparatus comprising:

a processor,
wherein the processor is configured to:

acquire an image signal of a captured image obtained by imaging a measurement sheet that has developed a color of a density corresponding to an external energy amount under application of external energy, using a sensor having a plurality of different spectral sensitivities;
acquire one or two or more first image signals corresponding to one or two or more spectral sensitivities from the image signal of the captured image;
acquire one or two or more second image signals that correspond to the one or two or more spectral sensitivities and that have at least one spectral sensitivity different from the first image signal, from the image signal of the captured image;
set the one first image signal as a third image signal or generate the third image signal by calculating a total of the two or more first image signals for each pixel;
set the one second image signal as a fourth image signal or generate the fourth image signal by calculating a total of the two or more second image signals for each pixel;
generate a fifth image signal by calculating a ratio between the third image signal and the fourth image signal for each pixel; and
derive a surface distribution of the external energy amount applied to the measurement sheet based on the fifth image signal.

**13.** The image processing apparatus according to claim 12,
wherein the processor derives a surface distribution of the external energy amount applied to the measurement sheet based on the one fifth image signal constituted of the ratio calculated for each pixel.

**14.** A program causing a computer to execute each step of the image processing method according to any one of claims 1 to 11.

15. A computer readable recording medium on which a program causing a computer to execute each step of the image processing method according to any one of claims 1 to 11 is recorded.

## FIG. 1

10

12
IMAGING UNIT

14
DISPLAY UNIT

16
OPERATING UNIT

34

STORAGE UNIT
18

PROCESSOR
20

## FIG. 2

20

22
IMAGE SIGNAL ACQUISITION UNIT

32
DISPLAY PROCESSING UNIT

34

CALIBRATION CURVE CREATION UNIT
28

RATIO CALCULATION UNIT
24

SURFACE DISTRIBUTION DERIVATION UNIT
30

## FIG. 3

```
                    ┌─────────┐
                    │  START  │
                    └─────────┘
                         │
                         ▼
    ┌──────────────────────────────────────────┐
    │     DECIDE EXPRESSION TO BE SELECTED      │──── S1
    └──────────────────────────────────────────┘
                         │
                         ▼
    ┌──────────────────────────────────────────┐
    │          CREATE CALIBRATION CURVE         │──── S2
    └──────────────────────────────────────────┘
                         │
                         ▼
┌─────────────────────────────────────────────────────┐
│ DERIVE EXTERNAL ENERGY AMOUNT FROM RATIO OF IMAGE    │──── S3
│       SIGNAL OF MEASUREMENT SHEET                    │
│                                                       │
│   ┌───────────────────────────────────────┐          │
│   │       IMAGE MEASUREMENT SHEET          │── S3-1   │
│   └───────────────────────────────────────┘          │
│                    │                                  │
│                    ▼                                  │
│   ┌───────────────────────────────────────┐          │
│   │ ACQUIRE IMAGE SIGNAL OF CAPTURED IMAGE │── S3-2   │
│   │         OF MEASUREMENT SHEET           │          │
│   └───────────────────────────────────────┘          │
│                    │                                  │
│                    ▼                                  │
│   ┌───────────────────────────────────────┐          │
│   │        ACQUIRE FIRST IMAGE SIGNAL      │── S3-3   │
│   └───────────────────────────────────────┘          │
│                    │                                  │
│                    ▼                                  │
│   ┌───────────────────────────────────────┐          │
│   │       ACQUIRE SECOND IMAGE SIGNAL      │── S3-4   │
│   └───────────────────────────────────────┘          │
│                    │                                  │
│                    ▼                                  │
│   ┌───────────────────────────────────────┐          │
│   │       GENERATE THIRD IMAGE SIGNAL      │── S3-5   │
│   └───────────────────────────────────────┘          │
│                    │                                  │
│                    ▼                                  │
│   ┌───────────────────────────────────────┐          │
│   │      GENERATE FOURTH IMAGE SIGNAL      │── S3-6   │
│   └───────────────────────────────────────┘          │
│                    │                                  │
│                    ▼                                  │
│   ┌───────────────────────────────────────┐          │
│   │       GENERATE FIFTH IMAGE SIGNAL      │── S3-7   │
│   └───────────────────────────────────────┘          │
│                    │                                  │
│                    ▼                                  │
│   ┌───────────────────────────────────────┐          │
│   │ DERIVE SURFACE DISTRIBUTION OF EXTERNAL│── S3-8   │
│   │ ENERGY AMOUNT FROM FIFTH IMAGE SIGNAL  │          │
│   └───────────────────────────────────────┘          │
└─────────────────────────────────────────────────────┘
                         │
                         ▼
                    ┌─────────┐
                    │   END   │
                    └─────────┘
```

FIG. 4

FIG. 5

## FIG. 6

## FIG. 7

# FIG. 8

# FIG. 9

## FIG. 10

## FIG. 11

## FIG. 12

## FIG. 13

## FIG. 14

## FIG. 15

## FIG. 16

# FIG. 17

FIG. 18

# FIG. 19

## INTERNATIONAL SEARCH REPORT

| International application No. |
| --- |
| **PCT/JP2021/027291** |

### A. CLASSIFICATION OF SUBJECT MATTER

*G01J 3/52*(2006.01)i; *G01L 1/00*(2006.01)i; *G01L 1/24*(2006.01)i
FI: G01L1/00 G; G01J3/52; G01L1/24 Z

According to International Patent Classification (IPC) or to both national classification and IPC

### B. FIELDS SEARCHED

Minimum documentation searched (classification system followed by classification symbols)

G01L1/00-G01L5/28; G01J3/46-G01J3/52

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2017-203653 A (MS TECHNOLOGY CO., LTD.) 16 November 2017 (2017-11-16) paragraphs [0002], [0003], [0011]-[0072], fig. 1-24 | 1-13 |
| Y | JP 2002-304625 A (SHARP KK) 18 October 2002 (2002-10-18) paragraphs [0007]-[0044], fig. 1-4 | 1-13 |
| A | JP 2016-003960 A (TOKYO METROPOLITAN INDUSTRIAL TECHNOLOGY RESEARCH INSTITUTE) 12 January 2016 (2016-01-12) paragraphs [0014]-[0038], fig. 1-5 | 1-13 |
| A | US 6047964 A (SPECTRA SCIENCE CORP.) 11 April 2000 (2000-04-11) column 5, line 41 to column 16, line 52, fig. 1-19 | 1-13 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 September 2021** | **05 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/027291**

| Patent document cited in search report | | | Publication date (day/month/year) | Patent family member(s) | | | Publication date (day/month/year) |
|---|---|---|---|---|---|---|---|
| JP | 2017-203653 | A | 16 November 2017 | (Family: none) | | | |
| JP | 2002-304625 | A | 18 October 2002 | (Family: none) | | | |
| JP | 2016-003960 | A | 12 January 2016 | (Family: none) | | | |
| US | 6047964 | A | 11 April 2000 | WO | 98/48382 | A2 | |
| | | | | AU | 7465998 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2516263 Y

- JP 2003520515 A

**Non-patent literature cited in the description**

- **ZHENGYOU ZHANG.** A Flexible New Technique for Camera Calibration. *Microsoft Research Technical Report, MSR-TR-98-71,* 02 December 1998